# EUROPÄISCHE PATENTSCHRIFT

(11) **EP 2 732 185 B1**
(45) Veröffentlichungstag und Bekanntmachung des Hinweises auf die Patenterteilung: **08.07.2015**
(21) Anmeldenummer: 12772716.2
(22) Anmeldetag: 28.09.2012
(51) Int. Cl.: F16K 1/46, F16K 1/42

(54) **HOCHDRUCKVENTIL**
HIGH PRESSURE VALVE
VANNE À HAUTE PRESSION

(43) Veröffentlichungstag der Anmeldung: 21.05.2014
(73) Patentinhaber: Holter Regelarmaturen GmbH & Co. KG, 33758 Schloß Holte-Stukenbrock (DE)
(72) Erfinder: WANGEMANN, Matthias, 33758 Schloß Holte (DE); MÜLLER, Andreas, 32839 Steinheim (DE); VOGT, Michaela, 33758 Schloß Holte-Stukenbrock (DE)
(74) Vertreter: Schober, Mirko
(86) Internationale Anmeldenummer: PCT/EP2012/004073
(87) Internationale Veröffentlichungsnummer: WO 2014/048446

(56) Entgegenhaltungen:
- WO-A1-01/31239
- WO-A1-01/46608
- DE-A1- 2 645 659
- US-A- 4 249 717
- US-A- 4 688 757

## Beschreibung

### Technisches Gebiet

Die Erfindung betrifft ein Hochdruckventil nach dem Oberbegriff des Anspruchs 1.

### Stand der Technik

Entsprechende Ventile (siehe beispielsweise DE-A-26 45 659) weisen einen Hochdruckbereich, einen Niederdruckbereich und ein in einem Kolbengehäuse zwischen Hochdruckbereich und Niederdruckbereich angeordnetes kolbenförmiges Absperrelement auf. Die Endlage dieses Absperrelements muss wegen des hohen Druckunterschiedes entsprechend abgedichtet werden, damit das Ventil sicher den Hochdruck- vom Niederdruckbereich trennt.

Aus EP 882 916 ist ein weiteres Ventil bekannt, bei welchem die Sitzdichtung durch eine Dichtung gebildet wird, welche im Ventilsitz des Ventils angeordnet ist, so dass der Kolben beim Schließen des Ventils axial gegen die Sitzdichtung gefahren wird, so dass der Kolben mit seiner Stirnseite gegen die Sitzdichtung anliegt. Im geöffneten Zustand des Ventils liegt die Sitzdichtung frei und kann so mit Hochdruck vom strömenden Medium direkt angeströmt werden, folglich unterliegt die bekannte Sitzdichtung einem erhöhten Verschleiß und muss häufiger ausgetauscht werden.

### Die Erfindung

Der Erfindung liegt daher die Aufgabe zugrunde, ein Hochdruckventil der eingangs genannten Art und eine Sitzdichtung anzugeben, bei welchen die geschilderten Probleme vermieden werden.

Gelöst wird diese Aufgabe durch ein Hochdruckventil mit den Merkmalen des Anspruchs 1. Vorteilhafte Ausführungsformen finden sich in den Unteransprüchen. Erfindungsgemäß ist die Sitzdichtung in einer Aussparung am Absperrelement vorgesehen. Dadurch wird erreicht, dass die Dichtung im geöffneten Zustand nicht durch das durch das Hochdruckventil strömende Fluid angeströmt wird.

Erfindungsgemäß ist die Aussparung durch eine ringförmige Öffnung auf der ventilsitzseitigen Stirnseite des kolbenförmigen Absperrelements geöffnet. Dabei weist die Sitzdichtung einen sich radial nach außen erstreckenden, ringförmigen Vorsprung oder Kragen auf, welcher die ringförmige Öffnung wenigstens teilweise verschließt. Dadurch kann ein am Ventilsitz vorgesehener Vorsprung in der Verschlussstellung in Anlage mit der Sitzdichtung gebracht werden, wobei der Vorsprung ebenfalls ringförmig ausgebildet und am Ventilsitz so angeordnet ist, dass er in die ringförmige Öffnung wenigstens teilweise hineinragt. Auf diese Weise wird die Sitzdichtung praktisch in der Stirnseite des Absperrelements eingekapselt und weist mit dem kragenförmigen Vorsprung in der ringförmigen Öffnung lediglich eine relativ kleine Fläche auf, welche am Absperrelement frei liegt. Diese Fläche ist letztlich durch die Breite des die ringförmige Öffnung bildenden Ringspaltes begrenzt. Auf diese Weise wird die überhaupt anströmbare und damit dem Verschleiß durch strömendes Fluid ausgesetzte Fläche der Dichtung sowie die aufzubringende Schließ- und Öffnungskraft beim Schließen bzw. Öffnen des Ventils minimiert und auftretende Kraftsprünge reduziert.

Die Durchlässe für das unter Hochdruck stehende Fluid liegen insbesondere oberhalb des Ventilsitzes, so dass die nur dem Ventilsitz zugewandte Seite der Sitzdichtung im geöffneten Zustand praktisch nicht angeströmt und somit geschont wird. Hierzu ist vorgesehen, dass das Absperrelement einen die Sitzdichtung radial außen umschließenden Wandabschnitt aufweist, welcher mit dem stirnseitigen Abschnitt des Absperrelements zusammen die ringförmige Öffnung bildet. Der Wandabschnitt erstreckt sich dabei in axialer Richtung des kolbenförmigen Absperrelements und weist eine stirnseitige Anschlagfläche auf, welche insbesondere etwa bündig mit der dem Ventilsitz zugewandten Dichtfläche des Vorsprungs der Sitzdichtung angeordnet ist. Die Anschlagfläche liegt in geschlossenem Zustand radial außen neben dem Vorsprung des Ventilsitzes am Ventilsitz an, wobei zwischen Anschlagfläche und Ventilsitz Fluid unter Hochdruck hindurchtreten und in die Aussparung eintreten kann, in welcher die Sitzdichtung untergebracht ist. Durch diesen insbesondere metallischen Anschlag wird zudem ein Zerquetschen oder eine unzulässige bzw. kritische Deformation der Sitzdichtung vermieden.

Erfindungsgemäß ist die Sitzdichtung druckdichtend bzw. selbstdichtend ausgebildet, indem sie von einem ebenfalls in der Aussparung vorgesehenen flexiblen, insbesondere O-Ring-förmigen Element umgeben ist. Tritt in der Verschlussstellung, wie oben geschildert, das Fluid durch die ringförmige Öffnung in die Aussparung ein, so wird dieses flexible Element durch den Druck verformt und gegen eine Innenwand des Absperrelements einerseits und den Vorsprung der Sitzdichtung andererseits gepresst, wodurch insbesondere der Vorsprung der Sitzdichtung gegen den Vorsprung des Ventilsitzes gepresst wird und die erforderliche Dichtwirkung entfaltet. Die Dichtwirkung ist insbesondere sichergestellt, wenn die Abmessungen der Aussparung und der Sitzdichtung so gewählt sind, dass das Produkt aus Fluiddruck oberhalb des Vorsprungs der Sitzdichtung und der dadurch mit Druck beaufschlagten Fläche der Sitzdichtung oder des Vorsprungs derselben, größer ist als das Produkt aus der gemeinsamen Anlagefläche zwischen Vorsprung der Sitzdichtung mit dem Ventilsitz bzw. mit dessen Vorsprung und dem dort, insbesondere im Dichtspalt, herrschenden Fluiddruck.

Bevorzugt weist der Wandabschnitt an seiner radial außen liegenden, stirnseitigen Kante eine Abrundung auf, so dass die von der Hochdruckseite kommende Strömung diesen Wandabschnitt möglichst verwirbelungsfrei in Richtung Niederdruckseite umströmen kann und so die Sitzdichtung zusätzlich geschont wird.

Die Erfindung wird nachfolgend anhand der Figuren 1 bis 3 näher erläutert.

### Kurzbeschreibung der Zeichnungen

Figur 1 zeigt einen Schnitt durch ein erfindungsgemäßes Hochdruckventil.
Figur 2 zeigt eine Ausschnittvergrößerung des Ausschnitts A aus Figur 1 im Bereich des Ventilsitzes in einer geöffneten Stellung.
Figur 3 zeigt eine Ausschnittvergrößerung des Ausschnitts A aus Figur 1 im Bereich des Ventilsitzes in einer Verschlussstellung.

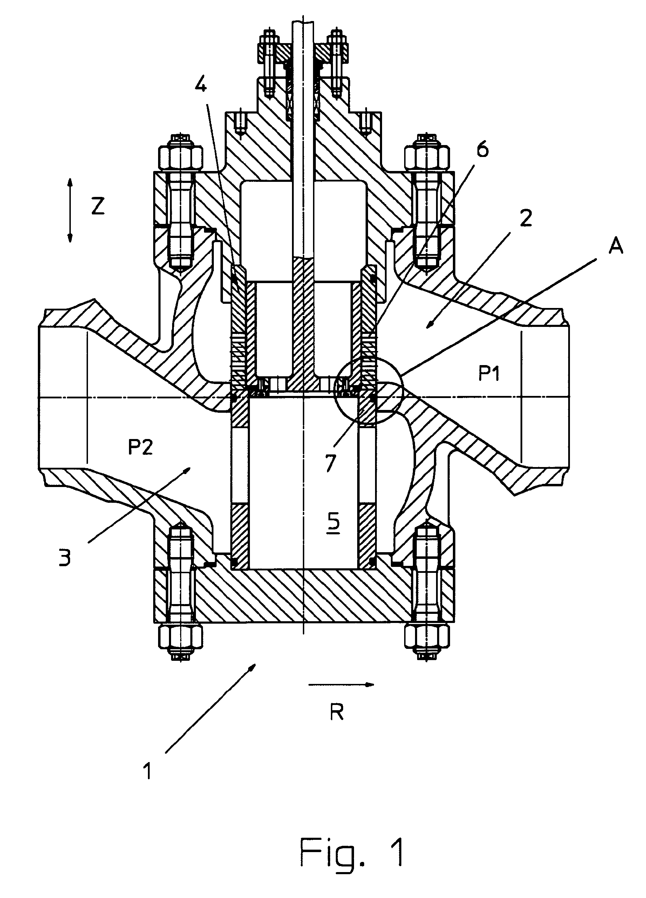

Das in Figur 1 dargestellte Hochdruckventil (im Folgenden Ventil genannt) 1 weist eine Hochdruckseite 2 mit einem dort anliegenden Druck p1 und eine Niederdruckseite 3 mit einem dort herrschenden Druck p2 auf, wobei in der Verschlussstellung gilt p1 > p2. Das Ventil 1 weist ein kolbenförmiges Absperrelement 4 auf, welches in axialer Richtung Z zum Öffnen und Schließen des Ventils 1 in einem insbesondere zylindrischen Gehäuse 5 verschieblich gelagert ist. Wird das Ventil 1 geöffnet, so strömt das Fluid (Gas oder Flüssigkeit) von der Hochdruckseite 2 durch Öffnungen 6 in der Gehäusewand durch das Gehäuse 5 in den Niederdruckbereich 3. Zum Schließen wird das Absperrelement 4 in Richtung Z auf den Ventilsitz 7 zu verschoben.

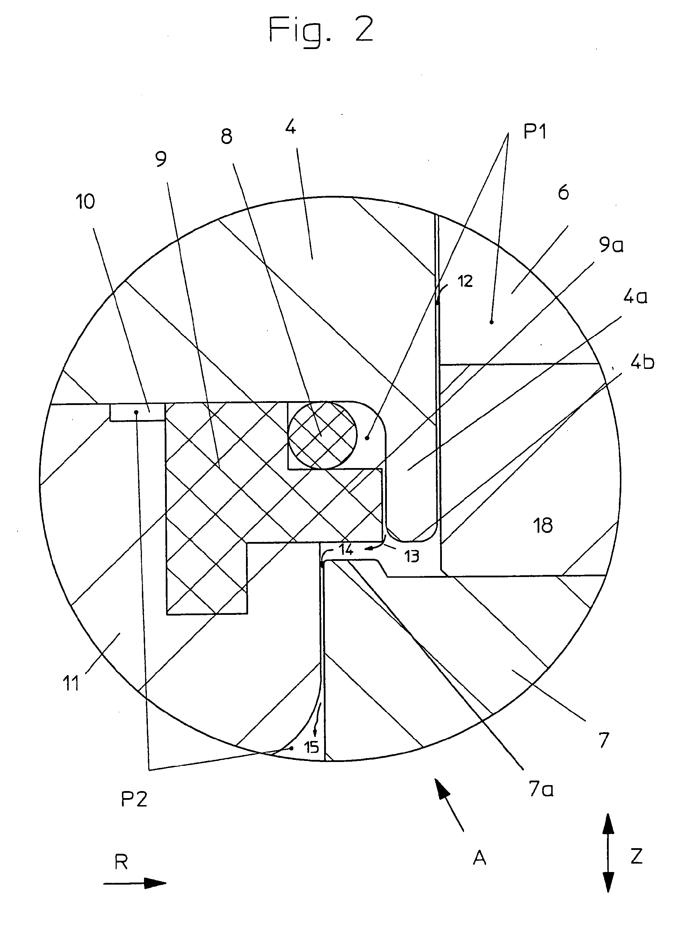

Figur 2 zeigt die geöffnete Stellung. An der dem Ventilsitz 7 zugewandten Stirnseite weist das Absperrelement 4 eine Aussparung auf, in welche eine Sitzdichtung 9 eingesetzt ist. Die Aussparung ist zum Ventilsitz 7 hin geöffnet. Zwischen dem in radialer Richtung R außen liegenden, hier als sich in axialer Richtung Z erstreckender und als Kolbenwand ausgebildeter Wandabschnitt 4a und einem an der Stirnseite des Absperrelements 4 ausgebildeten Kopfabschnitt 11 ist die genannte Aussparung offen und bildet an dieser Stelle einen Ringspalt bzw. eine ringförmige Öffnung aus. Diese Öffnung ist schmaler als die Sitzdichtung, so dass diese unter Druck auch nicht aus der Aussparung hinaus gedrückt werden kann. Der Kopfabschnitt 11 kann dadurch vom Absperrelement 4 zum Ein- und Ausbau der Sitzdichtung 9 gelöst werden. Die Verbindung zwischen Kopfabschnitt 11 und Absperrelement 4 ist insbesondere fluiddurchlässig, weshalb in dem an die Aussparung angrenzenden Überdruckausgleichsbereich 10 der Niederdruck p2 anliegt. Die Sitzdichtung 9 ist durch den Kopfabschnitt 11 eingekammert, wobei zur Sicherung der Sitzdichtung 9 im gezeigten Beispiel diese mit ihrem Abschnitt 9b formschlüssig in den Kopfabschnitt 11 eingesetzt ist.

In die ringförmige Öffnung ragt ein Teil der Sitzdichtung 9, nämlich ein radial nach außen sich erstreckender kragenförmiger Vorsprung 9a der Sitzdichtung 9 hinein und verschließt den Ringspalt wenigstens teilweise. In der Aussparung auf der dem Ventilsitz 7 abgewandten Seite des Vorsprungs 9 ist ein insbesondere O-Ring-förmiges, flexibles Element 8 vorgesehen, welches die Sitzdichtung 9 radial außen umschließt. Flexibel heißt, dass das Element 8 aus einem Material, z.B. NBR, EPDM, FKM, besteht, welches sich unter Druck (Fluiddruck der Hochdruckseite) wesentlich leichter verformen lässt als die Sitzdichtung selbst, welche aus einem vergleichsweise starreren Material, insbesondere z.B. PTFE, besteht.

Im in Figur 2 gezeigten geöffneten Zustand gelangt das Fluid von der Hochdruckseite durch die Öffnung 6 über den durch die Pfeile 12, 13, 14 und 15 dargestellten Strömungsweg zum Niederdruckbereich, wobei die Strömung zwischen dem Absperrelement und der Gehäusewand 18 hindurch verläuft, siehe Position 12, den Wandabschnitt 4a bei 13, und den Ventilsitz 7 bei 14 umströmt und bei 15 am Kopfabschnitt 11 vorbei strömt. Wie im gezeigten Beispiel zu erkennen, ist insbesondere die Stirnseite 4b des Wandabschnitts radial außen und/oder auch radial innen abgerundet, so dass das diese Seite 4b umströmende Fluid möglichst verwirbelungsfrei an dem freiliegenden Teil 9a der Dichtung vorbei strömen kann und der Verschleiß derselben minimiert wird.

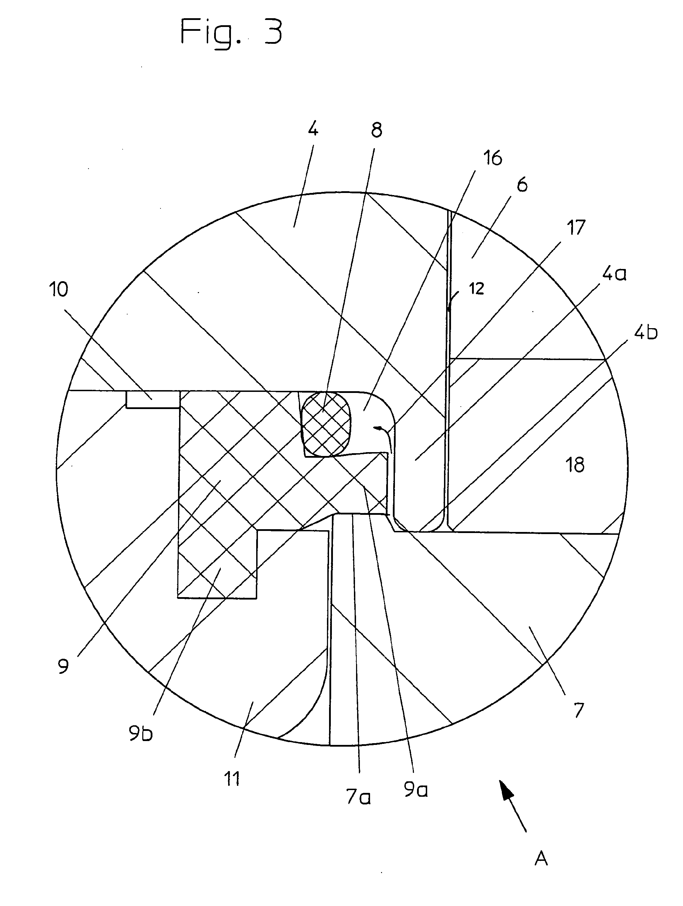

Am Ventilsitz erkennt man einen Vorsprung 7a, welcher so ausgelegt ist, dass er in der Verschlussstellung des Ventils 1 in die ringförmige Öffnung eintauchen und gegen die Sitzdichtung 9 an deren Vorsprung 9a anliegen kann. Diese Situation ist in Figur 3 dargestellt. Das Fluid aus der Hochdruckseite gelangt nun durch die Öffnung 6 (Pfeil 12) und umströmt den Wandabschnitt 4a und dessen Stirnseite 4b. Zwischen der am Ventilsitz 7 anliegenden Stirnseite 4b kann Fluid hindurch strömen und gelangt in die Aussparung 16 (Pfeil 17). Dadurch wird das flexible Element 8 durch Hochdruck verformt und gegen die Sitzdichtung 9 gepresst, welche sich einerseits in Richtung des Überdruckausgleichsbereiches 10, der als Ringspalt vorgesehen sein kann, um etwaigen Überdruck abzuleiten, verschiebt und deren Vorsprung 9a durch die Presswirkung des Elements 8 in Richtung des Ventilsitzes 7 gepresst wird. Dadurch wird der Vorsprung 9a gegen den in den Ringspalt eintauchenden Vorsprung 7a des Ventilsitzes gepresst, so dass die Sitzdichtung 9 selbstdichtend eine Strömung in den Niederdruckbereich verhindert. Das Element 8 wird in der Verschlussstellung durch seine Kompression gegen das Absperrelement 4 und an der diametral gegenüberliegenden Seite gegen den Vorsprung 9a der Sitzdichtung gedrückt. Das Produkt aus dem im Bereich 16 auf den Vorsprung 9a wirkenden Fluiddruck und der Fläche des Vorsprungs 9a sollte zur Sicherstellung einer guten Dichtwirkung größer sein als das Produkt aus der Anlagefläche zwischen den Teilen 9a und 7a und dem darauf, insbesondere im Dichtspalt, wirkenden Fluiddruck, insbesondere mittleren Fluiddruck.

## Patentansprüche

1. Hochdruckventil (1), mit einem Hochdruckbereich (2) und einem Niederdruckbereich (3), sowie einem als Kolben mit einer einem Ventilsitz (7) zugewandten Stirnseite (4b) ausgebildeten Absperrelement (4), das zum Verschließen und Öffnen einer Fluidverbindung zwischen dem Hochdruckbereich (2) und dem Niederdruckbereich (3) ausgebildet und hierzu zwischen einer geschlossenen Verschlussstellung und geöffneten Öffnungsstellung in einer Axialrichtung (Z) bewegbar ist, wobei zum Abdichten in der Verschlussstellung eine am Absperrelement (4) angebrachte Sitzdichtung (9) vorgesehen ist, welche zusammen mit einem flexiblen, insbesondere O-Ring-förmigen Element (8) in einer im Absperrelement (4) vorgesehenen Aussparung (16) angeordnet ist und von einem Wandabschnitt (4a) des Absperrelements (4) radial außen umschlossen ist, welcher mit einem stirnseitigen Abschnitt des Absperrelements (4) zusammen eine ringförmige Öffnung bildet, **dadurch gekennzeichnet, dass** am Ventilsitz (7) ein ringförmiger Vorsprung (7a) ausgebildet ist,
dass die Sitzdichtung (9) von dem flexiblen Element (8) umgeben ist und einen sich in Radialrichtung (R) nach außen erstreckenden, insbesondere kragenförmigen Vorsprung (9a) aufweist, der die ringförmige Öffnung wenigstens teilweise verschließt, wobei das flexible Element (8) dazu ausgebildet ist, um beim Eintritt eines Fluides in der Verschlussstellung durch die ringförmige Öffnung in die Aussparung (16) verformt und gegen eine Innenwand des Absperrelements (4) einerseits und gegen den Vorsprung (9a) der Sitzdichtung (9) andererseits gepresst zu werden, wodurch der Vorsprung (9a) der Sitzdichtung (9) gegen den in der Verschlussstellung wenigstens teilweise unter Anlage an die Sitzdichtung (9) in die ringförmige Öffnung hineinragenden Vorsprung (7a) des Ventilsitzes (7) gepresst wird, so dass sich die erforderliche Dichtwirkung in Form einer druckdichtenden sowie selbstdichtenden Sitzdichtung (9) entfaltet.

2. Hochdruckventil (1) nach Anspruch 1,
**dadurch gekennzeichnet,**
**dass** die Aussparung (16) und die Sitzdichtung (9) so bemessen sind, dass in der Verschlussstellung des Ventils (1) das Produkt aus Fluiddruck oberhalb des Vorsprungs (9a) der Sitzdichtung (9) und der dadurch mit Druck beaufschlagten Fläche des Vorsprungs (9a) der Sitzdichtung (9) größer ist als das Produkt aus der gemeinsamen Anlagefläche zwischen dem Vorsprung (9a) der Sitzdichtung (9) mit dem Ventilsitz (7, 7a) und dem dort herrschenden Fluiddruck.

3. Hochdruckventil (1) nach Anspruch 1 oder 2,
**dadurch gekennzeichnet,**
**dass** der Wandabschnitt (4a) an seiner radial außen liegenden stirnseitigen Kante eine Abrundung aufweist.

4. Hochdruckventil (1) nach einem der vorigen Ansprüche,
**dadurch gekennzeichnet,**
**dass** das Absperrelement (4) einen Kopfabschnitt (11) aufweist, welcher wenigstens einen Abschnitt (9b) der Sitzdichtung (9) formschlüssig umgibt.

5. Hochdruckventil (1) nach Anspruch 4,
**dadurch gekennzeichnet,**
**dass** die Sitzdichtung (9) durch den Kopfabschnitt (11) eingekammert ist, wobei zur Sicherung der Sitzdichtung (9) diese mit ihrem Abschnitt (9b) formschlüssig in den Kopfabschnitt (11) eingesetzt ist.

6. Hochdruckventil (1) nach einem der vorigen Ansprüche,
**dadurch gekennzeichnet,**
**dass** das flexible Element (8) aus einem Material besteht, welches sich unter Druck wesentlich leichter verformen lässt als die Sitzdichtung (9) selbst, welche aus einem vergleichsweise starren Material besteht.

## Claims

1. High-pressure valve (1), having a high-pressure region (2) and a low-pressure region (3), as well as a shut-off element (4) configured as a piston, having a face side (4b) that faces a valve seat (7), which is configured for closing and opening a fluid connection between the high-pressure region (2) and the low-pressure region (3), and for this purpose can be moved in an axial direction (Z) between a closed closure position and an open opening position, wherein a seat seal (9) affixed to the shut-off element (4) is provided for sealing in the closure position, which, together with a flexible element (8), particularly an O-ring-shaped element, is disposed in a recess (16) provided in the shut-off element (4) and is radially enclosed, on the outside, by a wall section (4a) of the shut-off element (4), which section, together with the face-side section of the shut-off element (4), forms a ring-shaped opening,
**characterized in that**
a ring-shaped projection (7a) is formed on the valve seat (7), the seat seal (9) is surrounded by the flexible element (8) and has a projection (9a), particularly a collar-shaped projection that extends outward in the radial direction (R), which projection closes off the ring-shaped opening, at least in part, wherein the flexible element (8) is configured for being deformed when a fluid enters through the ring-shaped opening into the recess (16) in the closure position, and for being pressed against an inner wall of the shut-off element (4), on the one hand, and against the projection (9a) of the seat seal (9), thereby causing the projection (9a) of the seat seal (9) to be pressed against the projection (7a) of the valve seat (7), which projects into the ring-shaped opening, at least in part, making contact with the seat seal (9), so that the required sealing effect is developed, in the form of a pressure-sealing as well as self-sealing seat seal (9).

2. High-pressure valve (1) according to claim 1,
**characterized in that**
the recess (16) and the seat seal (9) are dimensioned in such a manner that in the closure position of the valve (1), the product of the fluid pressure above the projection (9a) of the seat seal (9) and of the surface area of the projection (9a) of the seat seal (9), to which pressure is thereby applied, is greater than the product of the common contact surface between the projection (9a) of the seat seal (9) with the valve seat (7, 7a) and the fluid pressure prevailing there.

3. High-pressure valve (1) according to claim 1 or 2,
**characterized in that**
the wall section (4a) has a rounded part on its face-side edge that lies radially on the outside.

4. High-pressure valve (1) according to one of the preceding claims,
**characterized in that**
the shut-off element (4) has a head section (11) that surrounds at least one section (9b) of the seat seal (9), with shape fit.

5. High-pressure valve (1) according to claim 4,
**characterized in that**
the seat seal (9) is enclosed in a chamber by the head section (11), wherein, in order to secure the seat seal (9), it is inserted into the head section (11) with its section (9b), with shape fit.

6. High-pressure valve (1) according to one of the preceding claims,
**characterized in that**
the flexible element (8) consists of a material that can be deformed significantly more easily than the seat seal (9) itself, which consists of a comparatively rigid material.

## Revendications

1. Soupape haute pression (1) avec une zone haute pression (2) et une zone basse pression (3), ainsi qu'avec un élément de fermeture (4) qui, réalisé en forme de piston, avec une face frontale (4b) dirigée vers le siège de soupape (7), est destiné à fermer et ouvrir une liaison de fluide entre la zone haute pression (2) et la zone basse pression (3) et peut, dans ce but, être déplacé dans une direction axiale (Z), entre une position de fermeture fermée et une position d'ouverture ouverte, sachant que, pour assurer l'étanchéité dans la position de fermeture, est prévu un joint d'étanchéité de siège (9), qui, agencé sur l'élément de fermeture (4), est logé, en commun avec un élément (8) flexible, en particulier en forme de joint torique, dans un évidement (16) qui est prévue sur l'élément de fermeture (4) et est entouré radialement, à l'extérieur, par une section de paroi (4a) de l'élément de fermeture (4) qui forme, en commun avec une section frontale de l'élément de fermeture (4), une ouverture en forme d'anneau,
**caractérisée en ce que**,
sur le siège de soupape (7), est formée une saillie (7a) en forme de bague,
que le joint d'étanchéité de siège (9) est entouré par l'élément flexible (8) et présente une saillie (9a), particulièrement en forme de collerette, qui, s'étendant vers l'extérieur, dans la direction radiale (R), ferme, au moins partiellement, l'ouverture en forme d'anneau, sachant que l'élément flexible (8) est configuré de telle manière, que, dans la position de fermeture, lorsqu'un fluide entre dans l'évidement (16), par l'ouverture en forme d'anneau, il soit déformé et pressé contre une paroi intérieure de l'élément de fermeture (4), d'une part, et contre la saillie (9a) du joint d'étanchéité de siège (9), d'autre part, ce en raison de quoi la saillie (9a) du joint d'étanchéité de siège (9) est pressée contre la saillie (7a) du siège de soupape (7) qui, dans la position de fermeture, est engagée, au moins partiellement, dans l'ouverture en forme d'anneau, en portant contre le joint d'étanchéité de siège (9), de telle manière que l'effet d'étanchéité nécessaire se déploie, le joint d'étanchéité de siège (9) assurant une étanchéité par pression ainsi qu'une auto-étanchéité.

2. Soupape haute pression (1) selon la revendication 1,
**caractérisée en ce que**
l'évidement (16) et le joint d'étanchéité de siège (9) sont dimensionné de telle manière que, dans la position de fermeture de la soupape (1), le produit de la pression du fluide au-dessus de la saillie (9a) du joint d'étanchéité de siège (9) et de la surface de la saillie (9a) du joint d'étanchéité de siège (9) ainsi soumise à la pression soit supérieur au produit de la surface de contact commune entre la saillie (9a) du joint d'étanchéité de siège (9), avec le siège de soupape (7, 7a), et la pression du fluide y exercée.

3. Soupape haute pression (1) selon revendication 1 ou 2,
**caractérisée en ce que**
la section de paroi (4a) présente un arrondissement sur son bord frontal, s'étendant radialement, à l'extérieur.

4. Soupape haute pression (1) selon l'une des revendications précédentes,
**caractérisée en ce que**
l'élément de fermeture (4) présente une section de tête (11) qui entoure, en engagement géométrique, au moins une section (9b) du joint d'étanchéité de siège (9).

5. Soupape haute pression (1) selon la revendication 4,
**caractérisée en ce que**
le joint d'étanchéité de siège (9) est encastré dans la section de tête (11), sachant que pour sécuriser le joint d'étanchéité de siège (9), celui-ci est emboîté, avec sa section (9b), dans la section de tête (11).

6. Soupape haute pression (1) selon l'une des revendications précédentes,
**caractérisée en ce que**
l'élément flexible (8) consiste en un matériau qui est considérablement plus facilement déformable sous pression que le matériau du joint d'étanchéité de siège (9) lui-même, lequel consiste en un matériau rigide en comparaison.
